# EUROPÄISCHE PATENTSCHRIFT

(11) **EP 2 147 049 B1**
(45) Veröffentlichungstag und Bekanntmachung des Hinweises auf die Patenterteilung: **23.11.2011**
(21) Anmeldenummer: 08736472.5
(22) Anmeldetag: 23.04.2008
(51) Int. Cl.: C08L 33/12, C08L 25/12, C08L 51/00, C08L 33/08

(54) **THERMOPLASTISCHE FORMMASSEN MIT VERARBEITUNGSUNABHÄNGIGER ZÄHIGKEIT**
THERMOPLASTIC MOLDING COMPOUND WITH PROCESSING-INDEPENDENT VISCOSITY
MATIÈRE À MOULER THERMOPLASTIQUE À VISCOSITÉ NE DÉPENDANT PAS DU TRAITEMENT

(30) Priorität: 07.05.2007 EP 07107618
(43) Veröffentlichungstag der Anmeldung: 27.01.2010
(73) Patentinhaber: BASF SE, 67056 Ludwigshafen (DE)
(72) Erfinder: WEBER, Martin, 67487 Maikammer (DE); DATKO, Achim, 69181 Leimen (DE); LEBER, Ludger, 67125 Dannstadt-Schauernheim (DE)
(74) Vertreter: Jacobi, Markus Alexander
(86) Internationale Anmeldenummer: PCT/EP2008/054884
(87) Internationale Veröffentlichungsnummer: WO 2008/135384

(56) Entgegenhaltungen:
- WO-A-97/08241
- DE-A1-102004 059 243

## Beschreibung

Die vorliegende Erfindung betrifft eine thermoplastische Formmassen, enthaltend eine Mischung aus (A) wenigstens einem Methylmethacrylat-Polymerisat, (B) wenigstens einem Copolymerisat, (C) wenigstens einem Pfropfcopolymerisat, (D) wenigstens einem Polybutylacrylat mit einem Molekulargewicht zwischen 1700 und 4000 g/mol (bestimmt als M_{w} mittels Gelpermeationschromatographie) als Komponente (D) und (E) gegebenenfalls üblichen Zusatzstoffen als Komponente (E). Weiterhin betrifft die vorliegende Erfindung ein Verfahren zur Herstellung dieser thermoplastischen Formmasse, deren Verwendung und die daraus erhältlichen Formkörper.

Aus dem Stand der Technik sind bereits thermoplastische Formmassen bekannt.

Aus WO 97/08241 sind Formmassen bekannt, die aus einem harten Methylmethacrylat-Polymerisat, einem harten Polymerisat von vinylaromatischen Monomeren und Vinylcyanid und einem weichen Pfropfcopolymerisat umfassend einen kautschukelastischen Pfropfkern, eine erste Pfropfhülle aus einem Polymerisat aus einem vinylaromatischen Monomer und einem Alkylmethacrylat und eine zweite Pfropfhülle aus einem Alkyl(meth)acrylat-Polymerisat, aufgebaut sind. Diese Formmassen zeichnen sich durch gute Schlagzähigkeit, hohe Fließfähigkeit, hohe Lichttransmission, geringen Streulichtanteil und geringen Kantengelbstich aus. Bezüglich ihrer chemischen und physikalischen Beständigkeit gegenüber dem Einfluß von Chemikalien oder Lösungsmitteln sind diese Formmassen für manche Anwendungsgebiete, beispielsweise zur Verwendung als Kosmetikverpackungen, aber noch verbesserungswürdig.

WO 2006/018178 A1 offenbart thermoplastische Formmassen, enthaltend eine Mischung aus einem Methylmethacrylat-Polymerisat, einem Copolymerisat, erhältlich durch Polymerisation eines vinylaromatischen Monomeren und eines Vinylcyanids, einem Pfropfcopolymerisat, erhältlich aus einem Kern, erhältlich durch Polymerisation eines 1,3-Diens und eines vinylaromatischen Monomeren, einer ersten Pfropfhülle, erhältlich durch Polymerisation eines vinylaromatischen Monomeren, eines C₁-C₈-Alkylesters der Methacrylsäure und eines vernetzenden Monomeren, einer zweiten Pfropfhülle aus einem Alkyl(meth)acrylat-Polymerisat und mindestens einem hoch- oder hyperverzweigten Polymers, ausgewählt aus der Gruppe hoch- oder hyperverzweigter Polycarbonate oder hoch- oder hyperverzweigter Polyester. Diese thermoplastischen Formmassen weisen verbesserte Fließ- und Entformungseigenschaften auf, jedoch ist die Wämeformbeständigkeit der Formmassen nach WO 2006/018178 A1 noch verbesserungsbedürftig.

Der vorliegenden Erfindung liegt daher die Aufgabe zugrunde, thermoplastische Formmassen auf Basis harter Methylmethacrylat-Polymerisate, harter Polymerisate aus vinylaromatischen Monomeren und Vinylcyaniden und weicher Pfropfcopolymerisate zur Verfügung zu stellen, die bei verbesserter Fließfähigkeit mindestens vergleichbar gute optische Eigenschaften, insbesondere eine vergleichbar gute Transparenz und niedrige Lichtstreuung, wie vergleichbare thermoplastische Formmassen des Standes der Technik aufweisen. Eine weitere Aufgabe ist es, thermoplastische Formmassen bereit zu stellen, die neben einer verbesserten Fließfähigkeit auch eine reduzierte Abhängigkeit der Zähigkeit von den Verarbeitungsbedingungen aufweisen.

Diese Aufgaben werden gelöst durch eine thermoplastische Formmassen, enthaltend eine Mischung aus
(A) wenigstens einem Methylmethacrylat-Polymerisat, erhältlich durch Polymerisation einer Mischung, bestehend aus
   (A1) Methylmethacrylat und
   (A2) wenigstens einem C₁-C₈-Alkylester der Acrylsäure als Monomere
   als Komponente (A),
(B) wenigstens einem Copolymerisat, erhältlich durch Polymerisation einer Mischung, bestehend aus
   (B1) wenigstens einem vinylaromatischen Monomer und
   (B2) wenigstens einem Vinylcyanid als Monomere,
   als Komponente (B),
(C) wenigstens einem Pfropfcopolymerisat, erhältlich aus
   (C1) einem Kern, und
   (C2) einer ersten Pfropfhülle, erhältlich durch Polymerisation eines Monomerengemisches, bestehend aus
      (C21) wenigstens einem vinylaromatischen Monomeren,
      (C22) wenigstens einem C₁-C₈-Alkylester der Methacrylsäure und
      (C23) gegebenenfalls wenigstens einem vernetzenden Monomeren als Monomere,
      und
   (C3) einer zweiten Pfropfhülle, erhältlich durch Polymerisation eines Monomerengemisches, bestehend aus
      (C31) wenigstens einem C₁-C₈-Alkylester der Methacrylsäure und
      (C32) wenigstens einem C₁-C₈-Alkylester der Acrylsäure als Monomere,
      als Komponente (C),
(D) wenigstens einem Polybutylacrylat mit einem Molekulargewicht von 1700 bis 4000 g/mol (bestimmt als M_{w} mittels Gelpermeationschromatographie)
   als Komponente (D) und
(E) gegebenenfalls üblichen Zusatzstoffen als Komponente (E).

Die Aufgaben werden auch gelöst durch ein Verfahren zur Herstellung der erfindungsgemäßen thermoplastischen Formmasse, durch ein Formteil, enthaltend eine erfindungsgemäße thermoplastische Formmasse, durch die Verwendung einer erfindungsgemäßen thermoplastischen Formmasse zur Herstellung von Formkörpern und durch die Verwendung von Polybutylacrylat mit einem Molekulargewicht von 1700 bis 4000 g/mol (bestimmt als M_{w} mittels Gelpermeationschromatographie) zur Verbesserung der Fließfähigkeit und zur Reduzierung der Abhängigkeit der Kerbschlagzähigkeit und der Haze-Werte von thermoplastischen Formmassen.

Die erfindungsgemäßen Formmassen weisen neben verbesserter Fließfähigkeit auch eine reduzierte Abhängigkeit der Zähigkeit von den Verarbeitungsbedingungen auf. Es wurde gefunden, dass bei Verwendung der erfindungsgemäßen Komponente D neben der verbesserten Fließfähigkeit auch eine reduzierte Abhängigkeit der Kerbschlagzähigkeit und der Haze-Werte von den Spritzbedingungen auftritt. Formmassen, welche als Komponente D ein Produkt mit einem Molgewicht von 1700 bis 4000 g/mol (bestimmt als Mw mittels GPC, Laufmittel THF, 23 °C, Polystyrol-Eichung) aufweisen, zeichnen sich auch durch einen niedrigen Formbelag aus.

In einer bevorzugten Ausführungsform enthält die erfindungsgemäße thermoplastische Formmasse
- Komponente (A) in einer Menge von 20 bis 68,9 Gew.%, besonders bevorzugt 27,5 bis 62,3 Gew.-%, jeweils bezogen auf die Summe der Komponenten (A) bis (D),
- Komponente (B) in einer Menge von 20 bis 69 Gew.-%, besonders bevorzugt 30 bis 62,5 Gew.-%, jeweils bezogen auf die Summe der Komponenten (A) bis (D),
- Komponente (C) in einer Menge von 1 bis 60 Gew.-%, besonders bevorzugt 10 bis 45 Gew.-%, jeweils bezogen auf die Summe der Komponenten (A) bis (D),
- Komponente (D) in einer Menge 0,1 bis 5 Gew.-%, besonders bevorzugt 0,2 bis 3 Gew.-%, bezogen auf die Summe der Komponenten (A) bis (D) und
- Komponente (E) in einer Menge von 0 bis 20 Gew.-%, besonders bevorzugt 0 bis 15 Gew.-%, bezogen auf die Summe der Komponenten (A) bis (D), enthält.

Die Summe der in der Formmasse vorliegenden Komponenten (A) bis (D) bzw. (A) bis (E) beträgt 100 Gew.-%.

Im Folgenden werden die einzelnen Komponenten (A) bis (E) der erfindungsgemäßen thermoplastischen Formmasse näher beschrieben:

### Komponente (A):

Als Komponente (A) enthält die erfindungsgemäße thermoplastische Formmasse wenigstens ein Methylmethacrylat-Polymerisat, erhältlich durch Polymerisation einer Mischung, bestehend aus (A1) Methylmethacrylat und (A2) wenigstens einem C₁-C₈-Alkylester der Acrylsäure als Monomere.

Die in den erfindungsgemäßen thermoplastischen Formmassen vorliegenden Methylmethacrylat-Polymerisate (A) sind entweder Homopolymerisate aus Methylmethacrylat (MMA) oder Copolymerisate aus MMA mit bis zu 10 Gew.-%, bezogen auf (A), eines C₁-C₈-Alkylesters der Acrylsäure.

In einer bevorzugten Ausführungsform liegt in Komponente (A) (A1) in einer Menge von 90 bis 100 Gew.-%, besonders bevorzugt 92 bis 98 Gew.-% und (A2) in einer Menge von 0 bis 10 Gew.-%, besonders bevorzugt 2 bis 8 Gew.-%, jeweils bezogen auf (A) vor.

Als C₁-C₈-Alkylester der Acrylsäure (Komponente A2) kann einer ausgewählt aus der Gruppe bestehend aus Methylacrylat, Ethylacrylat, Propylacrylat, n-Butylacrylat, n-Pentylacrylat, n-Hexylacrylat, n-Heptylacrylat, n-Octylacrylat, 2-Ethylhexylacryat und Mischungen davon, vorzugsweise ausgewählt aus Methylacrylat, Ethylacrylat, n-Butylacrylat, 2-Ethylhexylacrylat und Mischungen davon, besonders bevorzugt Methylacrylat, eingesetzt werden.

Die Methylmethacrylat-(MMA)-Polymerisate können durch Substanz-, Lösungs- oder Perlpolymerisation nach bekannten Methoden hergestellt werden (siehe beispielsweise Kunststoff-Handbuch, Band IX, "Polymethacrylate", Vieweg/Esser, Carl-Hanser-Verlag 1975, Seiten 8 - 56) und sind im Handel erhältlich. Bevorzugt setzt man Methylmethacrylat-Polymerisate ein, deren Gewichtsmittelwerte M_{w} der Molmassen im Bereich von 60.000 bis 300.000 g/mol liegen (bestimmt durch Lichtstreuung in Chloroform).

### Komponente B:

Die Komponente (B) ist ein Copolymerisat aus wenigstens einem vinylaromatischen Monomeren (B1) und wenigstens einem Vinylcyanid (B2) als Monomere.

In einer bevorzugten Ausführungsform liegt in Komponente (B), (B1) in einer Menge von 75 bis 88 Gew.-%, besonders bevorzugt 79 bis 85 Gew.-%, und (B2) in einer Menge von 12 bis 25 Gew.-%, besonders bevorzugt 15 bis 21 Gew.-%, jeweils bezogen auf (B), vor.

Als vinylaromatisches Monomer (Komponente B1) kann Styrol, ein- bis dreifach mit C₁-C₈-Alkylresten substituiertes Styrol wie p-Methylstyrol oder tert.-Butylstyrol, sowie α-Methylstyrol, bevorzugt Styrol, eingesetzt werden.

Als Vinylcyanid (Komponente B2) kann Acrylnitril und/oder Methacrylnitril, bevorzugt Acrylnitril, eingesetzt werden.

Außerhalb des oben angegebenen Bereiches der Zusammensetzung der Komponente (B) werden üblicherweise bei Verarbeitungstemperaturen über 240 °C trübe Formmassen, die Schlieren aufweisen, erhalten.

Die Copolymerisate (B) können nach bekannten Verfahren hergestellt werden, beispielsweise durch Substanz-, Lösung-, Suspensions- oder Emulsions-Polymerisation, bevorzugt durch Lösungspolymerisation, siehe GB-A 14 72 195. Bevorzugt sind dabei Copolymerisate (B) mit Molmassen M_{w} von 60.000 bis 300.000 g/mol, bestimmt durch Lichtstreuung in Dimethylformamid.

### Komponente C:

Als Komponente (C) wird ein Pfropfcopolymerisat verwendet, aus einem Kern (C1) und zwei darauf aufgebrachten Pfropfhüllen (C2) und (C3).

In einer bevorzugten Ausführungsform liegt in der erfindungsgemäßen thermoplastische Formmasse in Komponente (C), (C1) in einer Menge von 60 bis 90 Gew.%, besonders bevorzugt 70 bis 80 Gew.-%, (C2) in einer Menge von 5 bis 20 Gew.%, besonders bevorzugt 10 bis 15 Gew.% und (C3) in einer Menge von 5 bis 20 Gew.-%, besonders bevorzugt 10 bis 15 Gew.%, jeweils bezogen auf (C), vor.

Der Kern (C1) ist in einer bevorzugten Ausführungsform erhältlich durch Polymerisation eines Monomerengemisches, bestehend aus
(C11) 65 bis 90 Gew.%, bezogen auf (C1), eines 1,3-Diens,
(C12) 10 bis 35 Gew.%, bezogen auf (C1), eines vinylaromatischen Monomeren, und
(C13) 0 bis 5 Gew.%, bezogen auf (C1), eines Agglomerationspolymerisates als Monomere.

Der Kern (C1) ist erhältlich durch Polymerisation eines Monomerengemisches, welches in einer erfindungsgemäßen Ausführungsform aus den Komponenten (C11) und (C12) und in einer weiteren Ausführungsform aus den Komponenten (C11), (C12) und (C13), jeweils als Monomere, besteht.

Ist (C13) in dem Monomerengemisch nicht vorhanden, so liegen (C11) bevorzugt in einer Menge von 65 bis 90 Gew.%, besonders bevorzugt 70 bis 85 Gew.%, und (C12) in einer Menge von 10 bis 35 Gew.%, besonders bevorzugt 15 bis 30 Gew.%, jeweils bezogen auf (C1), vor.

Ist (C13) in dem Monomerengemisch vorhanden, so liegen (C11) bevorzugt in einer Menge von 65 bis 89,9 Gew.-%, besonders bevorzugt 70 bis 84,5 Gew.%, (C12) in einer Menge von 10 bis 34,9 Gew.%, besonders bevorzugt 15 bis 29,5 Gew.%, und (C13) in einer Menge von 0,1 bis 5 Gew.%, bevorzugt 0,5 bis 2 Gew.%, jeweils bezogen auf (C1), vor.

Der Kern (C1) stellt die Pfropfgrundlage dar und weist einen Quellungsindex QI von 15 bis 50, insbesondere von 20 bis 40 auf, bestimmt durch Quellungsmessung in Toluol bei Raumtemperatur.

Als 1,3-Dien (Komponente C11) des Kerns des Pfropfcopolymerisats kann Butadien und/oder Isopren eingesetzt werden.

Als vinylaromatisches Monomer (Komponente C12) kann Styrol oder bevorzugt am Kern mit einer, vorzugsweise in α-Stellung, oder auch mehreren C₁-C₈-Alkylgruppe(n), vorzugsweise Methyl, substituiertes Styrol, eingesetzt werden.

Als Agglomerisationspolymerisat (Komponente C13) können dem Fachmann bekannte und beispielsweise in WO 01/83574, WO 02/10222 oder DE-A 24 27 960 beschriebene Stoffe eingesetzt werden. Als Agglomerationspolymerisate geeignet sind beispielsweise Dispersionen von Acrylesterpolymerisaten, bevorzugt von Copolymerisaten aus Ethylacrylat und Methacrylamid, in denen der Anteil an Methacrylamid 0,1 bis 20 Gew.-%, bezogen auf das Copolymerisat, beträgt. Die Konzentration der Acrylesterpolymerisate in der Dispersion des Agglomerisationspolymerisats beträgt vorzugsweise 3 bis 40 Gew.-%, besonders bevorzugt 5 bis 20 Gew.-%.

Die Herstellung des Kerns (C1) erfolgt nach dem Fachmann bekannten und beispielsweise in Encyclopedia of Polymer Science and Engineering, Vol. 1, S. 401 ff., beschriebenen Verfahren. In Abwesenheit von (C13) stellt man aus den Komponenten (C11) und (C12) nach dem Fachmann bekannten Verfahren, beispielsweise durch Emulsionspolymerisation, einen Kern her, der bevorzugt eine Glasübergangstemperatur von kleiner als 0 °C aufweist, und dessen mittlere Teilchengröße D₅₀ in der Regel im Bereich von 30 bis 240 nm, bevorzugt im Bereich von 50 bis 180 nm, liegt.

Ist die Komponente (C13) in dem Pfropfkern vorhanden, so erfolgt in einer zweiten Stufe nach dem Fachmann bekannten und beispielsweise in Encyclopedia of Polymer Science and Engineering, Vol. 1, S. 401 ff., beschriebenen Verfahren die Umsetzung des in der ersten Stufe erhaltenen Kerns mit dem Agglomerationspolymerisat (C13), wobei der Kern (C1) mit einer mittleren Teilchengröße D₅₀ im Bereich von 300 bis 400 nm, bevorzugt von 320 bis 380 nm, besonders bevorzugt von 340 bis 360 nm, erhalten wird. Die Teilchengröße D₅₀ wird bestimmt mittels analytischer Ultrazentrifuge nach der Methode von W. Scholtan und H. Lange, Kolloid-Z., und Z.-Polymere 250 (1972), Seiten 782 bis 796 als Gewichtsmittel der Teilchengröße. In Gegenwart der Komponente (C13) weist der Kern (C1) eine monomodale Teilchengrößenverteilung auf.

Auf den Kern (C1) wird die erste Pfropfhülle (C2) aufgebracht, welche die Monomere (C21), (C22) und gegebenenfalls (C23) enthält.

Als vinylaromatisches Monomer (Komponente C21) kann Styrol oder vorzugsweise am Kern mit einer, vorzugsweise in α-Stellung, oder auch mehreren C₁-C₈-Alkylgruppe(n), vorzugsweise Methyl, substituiertes Styrol eingesetzt werden.

Als C₁-C₈-Alkylester der Methacrylsäure (Komponente C22) wird erfindungsgemäß Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, sowie Mischungen dieser Monomere, verwendet, wobei Methylmethacrylat besonders bevorzugt ist.

Als Monomere (C23) können übliche vernetzend wirkende Monomere eingesetzt werden, also im Wesentlichen di- oder polyfunktionelle Comonomere, insbesondere Alkylenglykoldi(meth)acrylate wie Ethylen-, Propylen- und Butylenglykoldi(meth)acrylat, Allylmethacrylat, (Meth)acrylate von Glycerin, Trimethylolpropan, Pentaerythrit oder Vinylbenzole wie Di- oder Trivinylbenzol. Bevorzugt wird Butylenglykoldimethacrylat, Butylenglykoldiacrylat und Dihydrodicyclopentadienylacrylat in Form eines Isomerengemischs, besonders bevorzugt Dihydrodicyclopentadienylacrylat in Form eines Isomerengemischs, eingesetzt.

Auf die erste Pfropfhülle (C2) wiederum wird eine zweite Pfropfhülle (C3) aufgebracht, welche die Monomere (C31) und (C32) aufweist.

Die Monomere (C31) sind C₁-C₈-Alkylester der Methacrylsäure, bei den Monomeren (C32) handelt es sich um C₁-C₈-Alkylester der Acrylsäure.

Als C₁-C₈-Alkylester der Methacrylsäure (Monomere C31) werden erfindungsgemäß Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, sowie Mischungen dieser Monomere, verwendet, wobei Methylmethacrylat besonders bevorzugt ist.

Als C₁-C₈-Alkylester der Acrylsäure (Monomere C32) können Methylacrylat (MA), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, sowie Mischungen dieser Monomere untereinander, verwendet werden, wobei Methylacrylat besonders bevorzugt ist.

Die Herstellung der beiden Pfropfhüllen (C2) und (C3) erfolgt in Gegenwart des Kerns (C1) nach literaturbekannten Methoden, insbesondere durch Emulsionspolymerisation (Encyclopedia of Polymer Science and Engineering, Vol. 1, Seite 401 ff.). Durch die dabei angewandte so genannte Saatfahrweise werden bei der Herstellung der beiden Pfropfhüllen keine neuen Teilchen gebildet. Darüber hinaus ermöglicht es die Saatfahrweise die Zahl und die Art der Teilchen in beiden Pfropfstufen durch die Menge und die Art des eingesetzten Emulgators zu bestimmen. Die Emulsionspolymerisation wird üblicherweise durch Polymerisationsinitiatoren ausgelöst.

Bei der Emulsionspolymerisation können ionogene und nicht ionogene Emulgatoren verwendet werden.

Geeignete Emulgatoren sind beispielsweise Dioctylnatriumsulfosuccinat, Natriumlaurylsulfat, Natriumdodecylbenzolsulfonat, Alkylphenoxypolyethylensuffonate und Salze von langkettigen Carbon- und Sulfonsäuren.

Als nichtionogene Emulgatoren sind beispielsweise Fettalkoholpolyglykolether, Alkylarylpolyglykolether, Fettsäuremonoethanolamide sowie ethoxylierte Fettsäureamide und -amine geeignet.

Bezogen auf das Gesamtgewicht des Emulsionspfropfcopolymerisates liegt die Gesamtemulgatormenge vorzugsweise bei 0,05 bis 5 Gew.-%.

Als Polymerisationsinitiatoren können Ammonium- und Alkaliperoxodisulfate wie Kaliumperoxodisulfat sowie Initiatorkombinationssysteme wie Natriumpersulfat, Natriumhydrosulfit, Kaliumpersulfat, Natriumformaldehydsulfoxylat und Kaliumperoxodisulfat, Natriumdithionit-Eisen-(II)-sulfat verwendet werden, wobei die Polymerisationstemperatur im Fall der thermisch zu aktivierenden Ammonium- und Alkaliperoxodisulfate bei 50 bis 100 °C und bei den Initiatorkombinationen, die als Redoxsysteme wirksam sind, darunter liegen kann, etwa im Bereich von 20 bis 50 °C.

Die gesamte Initiatormenge liegt vorzugsweise zwischen 0,02 und 1,0 Gew.-%, bezogen auf das fertige Emulsionspolymerisat.

Sowohl bei der Herstellung der Grundstufe, d.h. des Kerns (C1), als auch bei der Herstellung der beiden Pfropfstufen, d.h. der beiden Pfropfhüllen (C2) und (C3), können ferner Polymerisationsregler eingesetzt werden. Als Polymerisationsregler dienen u.a. Alkylmercaptane wie beispielsweise n- oder tert.-Dodecylmercaptan. Die Polymerisationsregler werden üblicherweise in einer Menge von 0,01 bis 1,0 Gew.-%, bezogen auf die jeweilige Stufe, eingesetzt.

Im Übrigen wird das erfindungsgemäß zu verwendende Emulsionspfropfcopolymerisat so hergestellt, dass man eine wässrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann im Laufe von 15 bis 120 Minuten auf die Polymerisationstemperatur bringt. Anschließend wird bis zu einem Umsatz von mindestens 95% polymerisiert. Monomere, Vernetzer, Emulgator, Initiator und Regler können auch komplett oder teilweise als Zulauf der wässrigen Vorlage zugeführt werden.

Gegebenenfalls nach einer Nachreaktionszeit von 15 bis 120 Minuten werden die Stufen (C2) und (C3) unter Zulauf der Monomeren in Gegenwart der bereits gebildeten Stufe (C1) durch Emulsionspolymerisation erzeugt.

Die Isolierung des Emulsionspfropfcopolymerisates aus dem erhaltenen Latex erfolgt auf bekannte Weise durch Ausfällung, Filtration und anschließender Trocknung. Für die Ausfällung können beispielsweise wässrige Lösungen von anorganischen Salzen wie Natriumchlorid, Natriumsulfat, Magnesiumsulfat und Calciumchlorid, wässrige Lösungen von Salzen der Ameisensäure wie Magnesiumformiat, Calciumformiat und Zinkformiat, wässrige Lösungen von anorganischen Säuren wie Schwefel- und Phosphorsäure sowie wässrige ammoniakalische und aminische Lösungen sowie andere wässrige alkalische Lösungen, z.B. von Natrium- und Kaliumhydroxid verwendet werden. Die Fällung kann aber auch durch physikalische Methoden, beispielsweise Gefrierfällung, Scherfällung, Dampffällung erfolgen.

Die Trocknung kann beispielsweise durch Gefrier-, Sprüh-, Wirbelschicht- und Umlufttrocknung erfolgen.

Das ausgefällte Emulsionspfropfcopolymerisat kann auch ohne Trocknung weiterverarbeitet werden.

Das Pfropfcopolymerisat (C) weist vorzugsweise einen Quellungsindex QI von 10 bis 40, insbesondere von 12 bis 35 auf. Der Quellungsindex wird dabei durch Quellungsmessung in Toluol bei Raumtemperatur bestimmt.

### Komponente D:

In der erfindungsgemäßen thermoplastischen Formmasse wird als Komponente D wenigstens ein Polybutylacrylat mit einem Molekulargewicht von 1700 bis 4000 g/mol (bestimmt als M_{w} mittels Gelpermeationschromatographie) eingesetzt.

Die Herstellung der Polybutylacrylate erfolgt durch radikalische Polymerisation, wobei als Initiatoren Azo- oder Peroxidverbindungen verwendet werden können. Die Herstellung solcher Verbindungen ist z.B. beschrieben in "Encydopedia of Polymer Science and Engineering, H.F. Mark (Ed.) J. Wiley&Sons, New York, 1985, Seiten 265 ff., Verfahren zur Herstellung sind ebenfalls im gleichen Dokument ab Seite 269 ff. beschrieben. Die Polybutyacrylate können bis 40 Gew.-%, bevorzugt bis 20 Gew.-% eines oder mehrerer copolymerisierbarer Monomere enthalten. Bevorzugte Comonomere sind ausgewählt aus der Gruppe bestehend aus Acrylaten, Methacrylaten, Styrol oder dessen Derivaten, Maleinsäureanhydrid, Acrylnitril und Mischungen davon.

Bevorzugt werden Polybutylacrylate verwendet, die bei Raumtemperatur flüssig sind.

### Komponente E:

In der erfindungsgemäßen thermoplastischen Formmasse können gegebenenfalls übliche Zusatzstoffe als Komponente E vorliegen. Liegt Komponente E vor, dann liegt sie bevorzugt in einer Menge von 0 bis 20 Gew.-%, besonders bevorzugt 0 bis 10 Gew.-%, jeweils bezogen auf die Summe der Komponenten (A) bis (D), vor.

Als Komponente E können alle dem Fachmann bekannten Zusatzstoffe für thermoplastische Formmassen eingesetzt werden. In einer bevorzugten Ausführungsform werden Zusatzstoffe eingesetzt, die sich in den Komponenten (A) bis (D) gut lösen, beziehungsweise mit diesen gut mischbar sind. Besonders bevorzugte Zusatzstoffe sind Farbstoffe, Stabilisatoren, Schmiermittel und Antistatika.

Als Stabilisatoren sind zum Beispiel 2,6-disubstituierte Phenole oder organische Phosphite geeignet. Bevorzugt sind Mischungen aus mindestens einem 2,6-disubstituierten Phenol und mindestens einem organischen Phosphit. Diese Mischungen sind in der Schrift WO 98/45365 (dort als Komponente C), auf die hiermit ausdrücklich Bezug genommen wird, eingehend beschrieben.

Bevorzugt wird auf 2,6-disubstituierte Phenole zurückgegriffen, die in 2- und/oder 6-Position ein guarternäres C-Atom, das direkt mit dem aromatischen Ring verknüpft ist, aufweisen. Als solche Substituenten kommen die t-Butyl- und die 1'-Methylcyclohexylgruppe in Frage. Geeignete 2,6-Diphenole sind zum Beispiel 2,6-Di-t-butyl-4-methylphenol, 1,6-Triethylen-glycolbis-[3-(3,5-di-(1,1-dimethylethyl)-4-hydroxyphenyl)-propionsäure]ester, butylierte Reaktionsprodukte aus p-Cresol und Dicyclopentadien, z.B. gemäß CAS Reg.-No. [68610-51-51], 2,2'-Methylen-bis-(4-methyl-6-t-butylphenol), 2,2'-Methylen-bis-[4-methyl-6-(1 -methyl-cyclohexyl)phenol], 2,2'-Iso-butylidenbis-(4,6-dimethylphenol), Tocopherol, Pentaerythrit-tetrakis-[3-(3,5-bis-1,1-dimethylethyl)-4-hydroxyphenyl)-propionsäure]ester sowie insbesondere Octadecyl-3-[3,5-di-(1,1-dimethylethyl)-4-hydroxyphenyl]propionat und 1,6-Hexandiolbis-[3-(3,5-di-(1,1-dimethylethyl)-4-hydroxyphenylpropionsäure]ester.

Die aufgeführten 2,6-Diphenole können alleine oder im Gemisch vorliegend verwendet werden. Sie werden bevorzugt in Mengen von 0,02 bis 5, besonders bevorzugt von 0,05 bis 1 und insbesondere in Mengen von 0,1 bis 0,5 Gew.-%, bezogen auf das Gesamtgewicht der Polymermischung, eingesetzt.

Als organische Phosphite kommen bevorzugt Triisooctylphosphit, Triisodecylphosphit, Trilaurylphosphit, Diisooctylphenylphosphit, Diisodecylphenylphosphit, Dilaurylphenylphosphit, Isooctyldiphenylphosphit, Diphenylisodecylphosphit, Diphenyllaurylphosphit, Bis-lauryl-pentaerythrit-diphosphit, Bis-stearyl-pentaerythrit-diphospit oder deren Mischungen zum Einsatz.

Die aufgeführten organischen Phosphite werden bevorzugt in Mengen von 0,02 bis 5, besonders bevorzugt 0,05 bis 1 und insbesondere in Mengen von 0,1 bis 0,5 Gew.-%, bezogen auf das Gesamtgewicht der Polymermischung, eingesetzt.

Die Herstellung der erfindungsgemäßen Formmassen aus den Komponenten (A), (B), (C), (D) und gegebenenfalls (E) erfolgt nach dem Fachmann bekannten Verfahren, beispielsweise durch Mischen der Komponenten in der Schmelze mit dem Fachmann bekannten Vorrichtungen bei Temperaturen im Bereich von 200 bis 300 °C, insbesondere bei 200 bis 280 °C. Die vorliegende Erfindung betrifft auch ein Verfahren zur Herstellung einer erfindungsgemäßen thermoplastischen Formmasse durch Mischen der Komponenten (A) bis (D) und gegebenenfalls (E) in der Schmelze, bevorzugt bei Temperaturen im Bereich von 200 bis 300 °C, besonders bevorzugt bei 200 bis 280 °C.

Die vorliegende Erfindung betrifft auch ein Formteil, enthaltend eine erfindungsgemäße thermoplastische Formmasse.

Die erfindungsgemäßen thermoplastischen Formmassen zeichnen sich insbesonders durch gute mechanische und optische Eigenschaften aus. Insbesondere ist die Schlagzähigkeit von den Verarbeitungsbedingungen unabhängig.

Die vorliegende Erfindung betrifft auch die Verwendung der erfindungsgemäßen thermoplastischen Formmasse zur Herstellung von Formkörpern.

### Beispiele

In den nachfolgenden erfindungsgemäßen Beispielen und den Vergleichsbeispielen werden jeweils thermoplastische Formmassen hergestellt und folgende Eigenschaften ermittelt:

### Brechungsindex n_{D} [dimensionslos]:

Die Brechungsindices (n_{D}-C), (n_{D}-A) und (n_{D}-B) werden an Folien gemessen, die aus den jeweiligen Polymeren in einer IWK-Presse bei 200 °C und einem Druck von 3 bis 5 bar 2 min vorgepresst und abschließend bei 200 °C und 200 bar 3 min nachgepresst wurden. Die Messungen werden bei 20 °C mit einem Abbé-Refraktometer nach der Methode zur Messung der Brechungsindizes bei festen Körpern durchgeführt (s. Ullmanns Encyklopädie der technischen Chemie, Band 2/1, S. 486, Herausgeber E. Foerst; Urban & Schwarzenberg, München-Berlin 1961).

Die Probekörper werden mittels Spritzguß bei 250 °C Massetemperatur und 60 °C Werkzeugtemperatur hergestellt. Um die Unabhängigkeit bestimmter Materialeigenschaften bei unterschiedlichen Bedingungen zu zeigen, werden Probekörper für die Messung der Kerbschlagzähigkeit und der optischen Eigenschaften auch bei 230 und 270 °C Massetemperatur hergestellt.

### MVR [ml/10']:

Als Maß für die Fließfähigkeit wird die Meltvolume Rate (MVR) 220/10 gemäß DIN EN ISO N33 bestimmt.

### Kerbschlagzähigkeit aₖ [kJ/m²]:

Die Kerbschlagzähigkeit aₖ wird gemäß ISO 179 1eA(F) bei 23 °C bestimmt.

### Schädigungsarbeit Ws [Nm]:

Die Schädigungsarbeit wird an Platten der Größe 60 mm * 60 mm * 2 mm nach ISO 6603 ermittelt.

### Transmission T [%]:

Die Transmission wird gemäß DIN 53236 an Platten mit einer Dicke von 2 mm bestimmt.

### Haze [%]:

Als Maß für die Lichtstreuung wird der Haze-Wert gemäß ASTM D 1003 an Probekörpern mit einer Dicke von 2 mm bestimmt.

### Vicat B [°C]:

Die Vicat B-Wärmeformbeständigkeit wird nach ISO 306 an ISO-Stäben bestimmt.

### Formbelag:

Nach Herstellung von 100 ISO-Stäben wurde die Werkzeugoberfläche qualitativ begutachtet. O kein Belag; + leichter Belag; ** starker Belag

### Herstellung der Formmassen:

Als Komponente A wird ein Copolymerisat aus 95,5 Gew.-% Methylmethacrylat und 4,5 Gew.-% Methylacrylat mit einer Viskositätszahl VZ von 70 ml/g (bestimmt als 0,5 Gew.-%ige Lösung in Dimethylformamid bei 23 °C nach DIN 53727) und einem Brechungsindex von 1,4921 eingesetzt.

Als Komponente B wird ein Copolymerisat aus 81 Gew.-% Styrol und 19 Gew.-% Acrylnitril mit einer Viskositätszahl VZ von 62 ml/g (bestimmt als 0,5 gew.-%ige Lösung in Dimethylformamid bei 23 °C nach DIN 53727) und einem Brechungsindex von 1,5732 eingesetzt.

Die Komponente C wird wie folgt hergestellt: In einer ersten Stufe werden Pfropfkeme C1 hergestellt, indem jeweils eine Lösung aus 186 Gew.-Teilen Wasser, 0,36 Gew.-Teilen Natriumbicarbonat, 0,30 Gew.-Teilen Kaliumperoxodisulfat und 0,55 Gew.-Teilen Kaliumstearat zunächst mit Stickstoff inertisiert und auf 70 °C temperiert wird. Anschließend werden unter Rühren innerhalb von 5 h eine Mischung aus 1 Gew.-Teil tert.-Dodecylmercaptan und 100 Gew.-Teilen einer Mischung aus Butadien und Styrol der Zusammensetzung 73/27 Gew.-%, bezogen auf C1, zugegeben. Man polymerisiert bis zu einem Umsatz von mindestens 95%. Die so aus 73 Gew.-% Butadien und 27 Gew.-% Styrol erhaltenen Pfropfkeme C1 weisen einen mittleren Teilchendurchmesser D₅₀ von 130 nm und einen Quellungsindex QI von 23 auf.

Aus den in der ersten Stufe erhaltenen Reaktionsmischungen enthaltend die Pfropfkerne C1 werden jeweils durch zweistufige Pfropfcopolymerisation in de nachfolgend beschriebenen Weise die Pfropfcopolymerisate C hergestellt.

Dabei werden folgende Abkürzungen verwendet:

| | |
|---|---|
| Bu | Butadien |
| S | Styrol |
| MMA | Methylmetacrylat |
| BA | Butylacrylat |
| DCPA | Dihydrocyclopentadienacrylat |

Die Reaktionsmischung enthaltend jeweils die in Tabelle 1 angegebenen Gew.-Teile Pfropfkeme C1 wird vorgelegt und mit Stickstoff inertisiert. Anschließend fügt man jeweils 0,1 Gew.-Teile Kaliumstearat und 0,04 Gew.-Teile Kaliumperoxodisulfat in 10 Gew.-Teilen Wasser hinzu. Diese Mischung wird jeweils bei 70 °C innerhalb von 1,5 h mit einer Mischung der die erste Pfropfhülle C2 aufbauenden Monomeren versetzt, wobei die letztgenannte Mischung jeweils aus den in Tabelle 1 genannten Gew.-Teilen S, MMA und DCPA besteht. Nach Zulaufende wird die Polymerisation zum Aufbau der ersten Pfropfhülle C2 15 min fortgesetzt.

Zu den so erhaltenen Reaktionsmischungen werden jeweils innerhalb der ersten 1,5 h die in Tabelle 1 wiedergegebenen Gew.-Teile einer Mischung der die zweite Pfropfhülle C3 aufbauenden Monomere zugegeben, wobei die letztgenannte Mischung jeweils aus den in Tabelle 1 genannten Gew.-Teilen MMA und BA besteht. Die Polymerisation wird zum Aufbau der zweiten Pfropfhülle C3 anschließend 60 Minuten lang fortgeführt. Anschließend fügt man jeweils weitere 0,04 Gew.-Teile Kaliumperoxodisulfat in 10 Gew.-Teilen Wasser hinzu und polymerisiert 1,5 h nach.

Die so erhaltenen Pfropfcopolymerisate C werden danach durch Fällung mit einer 1 Gew.-%igen Magnesiumsulfatlösung isoliert und nach dem Waschen mit Wasser bei 60 °C im Vakuum 24 Stunden lang getrocknet.

**Tabelle 1 Zusammensetzung C**

| **C1*** | **Zusammensetzung C1**** | **C2*** | **Zusammensetzung C2**** | **C3*** | **Zusammensetzung C3**** |
|---|---|---|---|---|---|
| 80 | 73 Bu | 10 | 32,7 S | 10 | 85 MMA |
| | | | 65,3 MMA | | |
| | 27 S | | 2 DCPA | | 15 BA |

| | | | | | |
|---|---|---|---|---|---|
| * Gew.-teile der Komponenten C1, C2 und C3, aus denen die Pfropfcopolymerisate C bestehen, wobei sich die Summe der Gew.-Teile C1, C2 und C3 zu 100 Gew.-Teilen addiert. ** Gew.-Teile und Art der Monomere, aus denen die jeweiligen Komponenten C1, C2 und C3 bestehen, wobei sich die jeweilige Summe zu 100 addiert. | | | | | |

### Komponente DV1 (Vergleich)

Polybutylacrylat mit einem Molgewicht von 1500 g/mol (bestimmt als Mw mittels GPC, Laufmittel THF, 23 °C, Polystyrol-Eichung).

### Komponente D1 (erfindungsgemäß)

Polybutylacrylat mit einem Molgewicht von 1900 g/mol (bestimmt als Mw mittels GPC, Laufmittel THF, 23 °C, Polystyrol-Eichung).

### Komponente D2 (erfindungsgemäß)

Polybutylacrylat mit einem Molgewicht von 3200 g/mol (bestimmt als Mw mittels GPC, Laufmittel THF, 23 °C, Polystyrol-Eichung).

### Komponente DV2 (Vergleich)

### Polybutylacrylat mit einem Molgewicht von 4400 g/mol (bestimmt als Mw mittels GPC, Laufmittel THF, 23 °C, Polystyrol-Eichung).

### Komponente V3 (Vergleich)

In einem Dreihalskolben, ausgestattet mit Rührer, Rückflusskühler und Innenthermometer wird 1 mol Glycerin x 7,5 PO mit 1 mol Diethylcarbonat gemischt und 250 ppm, bezogen auf den Alkohol, K₂CO₃ als Katalysator zugegeben. Die Mischung wird anschließend unter Rühren auf 140 °C erwärmt, und 2 Stunden bei dieser Temperatur gerührt. Mit fortschreitender Reaktionsdauer reduziert sich dabei die Temperatur des Reaktionsgemisches bedingt durch die einsetzende Siedekühlung des freigesetzten Monoalkohols. Nun wird der Rückflusskühler gegen einen absteigenden Kühler getauscht, Ethanol abdestilliert und die Temperatur des Reaktionsgemisches langsam bis auf 180 °C erhöht.

Am Reaktionsprodukt wird das Molekulargewicht wie folgt bestimmt: Gewichtsmittel Mw und Zahlenmittel Mn durch Gelpermeationschromatographie bei 20 °C mit vier hintereinander geschalteten Säulen (2 x 1000 A, 2 x 10.000 A), jede Säule 600 mm * 7,8 mm Typ PL-Gel von Fa. Phenomenex; Eluent Dimethylacetamid 0,7 ml/min, Standard Polymethylmethacrylat.

Das so erhaltene Polycarbonat weist ein Molekulargewicht Mw von 4400 g/mol, eine Molekulargewicht Mn von 2000 g/mol, eine Viskosität bei 23 °C von 2500 mPas und eine OH-Zahl von 177 mg KOH/g auf.

Aus den in Tabelle 2 angegebenen Gew.-teilen der Komponenten A, B und C, werden in einer Schmelze bei Temperaturen von 250 °C die in Tabelle 2 wiedergegeben Formmassen hergestellt.

**Tabelle 2**

| | **Versuchsnummer** | | | | | |
|---|---|---|---|---|---|---|
| | **V1** | **V2** | **3** | **4** | **V3** | **V4** |
| **Komponente** | **Gewichtsteile** | | | | | |
| **A** | 33,7 | 32,7 | 32,7 | 32,7 | 32,7 | 32,7 |
| **B** | 36,3 | 35,3 | 35,3 | 35,3 | 35,3 | 35,3 |
| **C** | 30 | 30 | 30 | 30 | 30 | 30 |
| **DV1** | 0 | 2 | - | - | - | - |
| **D1** | 0 | - | 2 | - | - | - |
| **D2** | 0 | - | - | 2 | - | - |
| **DV2** | 0 | - | - | - | 2 | |
| **V3** | 0 | - | - | - | - | 2 |

| **Parameter** | Messwerte | | | | | |
|---|---|---|---|---|---|---|
| **MVR** | 14,3 | 21,2 | 19,1 | 18,3 | 14,9 | 16,8 |
| **aₖ 230 °C** | 8,7 | 10,4 | 14,2 | 14,6 | 11,4 | 8,9 |
| **aₖ 250 °C** | 14,9 | 12,2 | 15,1 | 15,2 | 13,5 | 13,9 |
| **aₖ 270 °C** | 17,1 | 15,2 | 16,9 | 16,0 | 16,8 | 16,2 |
| **Ws** | 24,1 | 21,1 | 22,5 | 22,9 | 23,1 | 15,0 |
| **T** | 90,0 | 90,2 | 90,5 | 90,4 | 90,2 | 90,2 |
| **Haze 230 °C** | 6,7 | 5,6 | 4,6 | 5,1 | 6,0 | 6,7 |
| **Haze 250 °C** | 7,1 | 6,0 | 4,9 | 5,4 | 6,8 | 7,5 |
| **Haze 270 °C** | 10,2 | 7,4 | 5,5 | 6,0 | 8,2 | 9,1 |
| **Vicat B** | 90,4 | 88,1 | 88,7 | 88,8 | 89,2 | 85,6 |
| **Formbelag** | 0 | ++ | 0 | 0 | 0 | 0 |

Die Beispiele belegen, dass die erfindungsgemäßen Formmassen verbesserte Fließfähigkeit und gute optische Eigenschaften (hohe Transparenz, geringen Haze) besitzen. Die erfindungsgemäßen Formmassen zeichnen sich darüber hinaus auch durch verarbeitungsunabhängige Kerbeschlagzähigkeit und optische Eigenschaften aus.

## Patentansprüche

1. Thermoplastische Formmassen, enthaltend eine Mischung aus
(A) wenigstens einem Methylmethacrylat-Polymerisat, erhältlich durch Polymerisation einer Mischung, bestehend aus
(A1) Methylmethacrylat und
(A2) wenigstens einem C₁-C₆-Alkylester der Acrylsäure als Monomere als Komponente (A),
(B) wenigstens einem Copolymerisat, erhältlich durch Polymerisation einer Mischung, bestehend aus
(B1) wenigstens einem vinylaromatischen Monomer und
(B2) wenigstens einem Vinylcyanid als Monomere,
als Komponente (B),
(C) wenigstens einem Pfropfcopolymerisat, erhältlich aus
(C1) einem Kern, und
(C2) einer ersten Pfropfhülle, erhältlich durch Polymerisation eines Monomerengemisches, bestehend aus
(C21) wenigstens einem vinylaromatischen Monomeren,
(C22) wenigstens einem C₁-C₈-Alkylester der Methacrylsäure und
(C23) gegebenenfalls wenigstens einem vernetzenden Monomeren als Monomere,
und
(C3) einer zweiten Pfropfhülle, erhältlich durch Polymerisation eines Monomerengemisches, bestehend aus
(C31) wenigstens einem C₁-C₈-Alkylester der Methacrylsäure und
(C32) wenigstens einem C₁-C₈-Alkylester der Acrylsäure als Monomere,
als Komponente (C),
(D) wenigstens einem Polybutylacrylat mit einem Molekulargewicht von 1700 bis 4000 g/mol (bestimmt als M_{w} mittels Gelpermeationschromatographie) als Komponente (D) und
(E) gegebenenfalls üblichen Zusatzstoffen als Komponente (E).

2. Thermoplastische Formmassen nach Anspruch 1, **dadurch gekennzeichnet, dass** sie
- Komponente (A) in einer Menge von 20 bis 68,9 Gew.%, bezogen auf die Summe der Komponenten (A) bis (D),
- Komponente (B) in einer Menge von 20 bis 69 Gew.-%, bezogen auf die Summe der Komponenten (A) bis (D),
- Komponente (C) in einer Menge von 1 bis 60 Gew.-%, bezogen auf die Summe der Komponenten (A) bis (D),
- Komponente (D) in einer Menge 0,1 bis 5 Gew.%, bezogen auf die Summe der Komponenten (A) bis (D) und
- Komponente (E) in einer Menge von 0 bis 20 Gew.%, bezogen auf die Summe der Komponenten (A) bis (D), enthält.

3. Thermoplastische Formmasse nach Anspruch 1 oder 2, **dadurch gekennzeichnet, dass** in Komponente (A) (A1) in einer Menge von 90 bis 100 Gew.-% und (A2) in einer Menge von 0 bis 10 Gew.%, jeweils bezogen auf (A) vorliegt.

4. Thermoplastische Formmasse nach einem der Ansprüche 1 bis 3, **dadurch gekennzeichnet, dass** in Komponente (B), (B1) in einer Menge von 75 bis 88 Gew.-% und (B2) in einer Menge von 12 bis 25 Gew.-%, jeweils bezogen auf (B) vorliegt.

5. Thermoplastische Formmasse nach einem der Ansprüche 1 bis 4, **dadurch gekennzeichnet, dass** in Komponente (C), (C1) in einer Menge von 60 bis 90 Gew.-%, (C2) in einer Menge von 5 bis 20 Gew.-% und (C3) in einer Menge von 5 bis 20 Gew.-%, jeweils bezogen auf (C), vorliegt.

6. Verfahren zur Herstellung einer thermoplastischen Formmasse nach einem der Ansprüche 1 bis 5 durch Mischen der Komponenten (A) bis (D) und gegebenenfalls (E) in der Schmelze.

7. Verfahren nach Anspruch 6, **dadurch gekennzeichnet, dass** das Mischen bei einer Temperatur von 200 bis 300 °C durchgeführt wird.

8. Verwendung einer thermoplastischen Formmasse nach einem der Ansprüche 1 bis 5 zur Herstellung von Formkörpern.

## Claims

1. A thermoplastic molding composition, comprising a mixture composed of
(A) at least one methyl methacrylate polymer, obtainable via polymerization of a mixture, composed of
(A1) methyl methacrylate, and
(A2) at least one C₁-C₈-alkyl acrylate, as monomers,
as component (A),
(B) at least one copolymer, obtainable via polymerization of a mixture, composed of
(B1) at least one vinylaromatic monomer, and
(B2) at least one vinyl cyanide, as monomers,
as component (B),
(C) at least one graft copolymer, obtainable from
(C1) a core, and
(C2) a first graft shell, obtainable via polymerization of a monomer mixture, composed of
(C21) at least one vinylaromatic monomer,
(C22) at least one C₁-C₈-alkyl methacrylate, and
(C23) optionally, at least one crosslinking monomer, as monomers,
and
(C3) a second graft shell, obtainable via polymerization of a monomer mixture, composed of
(C31) at least one C₁-C₈-alkyl methacrylate, and
(C32) at least one C₁-C₈-alkyl acrylate, as monomers,
as component (C),
(D) at least one polybutyl acrylate whose molar mass is from 1700 to 4000 g/mol (determined as M_{w} by means of gel permeation chromatography),
as component (D), and
(E) optionally conventional additives, as component (E).

2. The thermoplastic molding composition according to claim 1, which comprises
- an amount of from 20 to 68.9% by weight, based on the entirety of components (A) to (D), of component (A),
- an amount of from 20 to 69% by weight, based on the entirety of components (A) to (D), of component (B),
- an amount of from 1 to 60% by weight, based on the entirety of components (A) to (D), of component (C),
- an amount of from 0.1 to 5% by weight, based on the entirety of components (A) to (D), of component (D), and
- an amount of from 0 to 20% by weight, based on the entirety of components (A) to (D), of component (E).

3. The thermoplastic molding composition according to claim 1 or 2, wherein, in component (A), the amount present of (A1) is from 90 to 100% by weight and the amount present of (A2) is from 0 to 10% by weight, based in each case on (A).

4. The thermoplastic molding composition according to any of claims 1 to 3, wherein, in component (B), the amount present of (B1) is from 75 to 88% by weight and the amount present of (B2) is from 12 to 25% by weight, based in each case on (B).

5. The thermoplastic molding composition according to any of claims 1 to 4, wherein, in component (C), the amount present of (C1) is from 60 to 90% by weight, the amount present of (C2) is from 5 to 20% by weight, and the amount present of (C3) is from 5 to 20% by weight, based in each case on (C).

6. A process for preparation of a thermoplastic molding composition according to any of claims 1 to 5 via mixing of components (A) to (D) and, optionally, (E) in the melt.

7. The process according to claim 6, wherein the mixing is carried out at a temperature of from 200 to 300°C.

8. The use of a thermoplastic molding composition according to any of claims 1 to 5 for production of moldings.

## Revendications

1. Matières à mouler thermoplastiques, contenant un mélange de
(A) au moins un polymérisat de méthacrylate de méthyle, pouvant être obtenu par polymérisation d'un mélange consistant en
(A1) méthacrylate de méthyle et
(A2) au moins un ester alkylique en C₁-C₈ de l'acide acrylique en tant que monomères en tant que composant (A),
(B) au moins un copolymérisat, pouvant être obtenu par polymérisation d'un mélange consistant en
(B1) au moins un monomère vinylaromatique et
(B2) au moins un cyanure de vinyle en tant que monomères,
en tant que composant (B),
(C) au moins un copolymérisat de greffage, pouvant être obtenu à partir
(C1) d'un noyau, et
(C2) d'une première enveloppe de greffage, pouvant être obtenue par polymérisation d'un mélange de monomères, consistant en
(C21) au moins un monomère vinylaromatique,
(C22) au moins un ester alkylique en C₁-C₈ de l'acide méthacrylique et
(C23) éventuellement au moins un monomère réticulant en tant que monomères,
et
(C3) d'une deuxième enveloppe de greffage, pouvant être obtenue par polymérisation d'un mélange de monomères, consistant en
(C31) au moins un ester alkylique en C₁-C₈ de l'acide méthacrylique et
(C32) au moins un ester alkylique en C₁-C₈ de l'acide acrylique en tant que monomères,
en tant que composant (C),
(D) au moins un poly(acrylate de butyle) ayant une masse moléculaire de 1 700 à 4 000 g/mole (déterminée en tant que M_{w} par chromatographie par perméation de gel)
en tant que composant (D) et
(E) éventuellement des additifs usuels en tant que composant (E).

2. Matières à mouler thermoplastiques selon la revendication 1, **caractérisées en ce qu'**elles contiennent
- le composant (A) en une quantité de 20 à 68,9 % en poids, par rapport à la somme des composants (A) à (D),
- le composant (B) en une quantité de 20 à 69 % en poids, par rapport à la somme des composants (A) à (D),
- le composant (C) en une quantité de 1 à 60% en poids, par rapport à la somme des composants (A) à (D),
- le composant (D) en une quantité de 0,1 à 5 % en poids, par rapport à la somme des composants (A) à (D) et
- le composant (E) en une quantité de 0 à 20% en poids, par rapport à la somme des composants (A) à (D).

3. Matière à mouler thermoplastique selon la revendication 1 ou 2, **caractérisée en ce que** dans le composant (A) (A1) est présent en une quantité de 90 à 100 % en poids et (A2) est présent en une quantité de 0 à 10% % en poids, chaque fois par rapport à (A).

4. Matière à mouler thermoplastique selon l'une quelconque des revendications 1 à 3, caractérisée en ce dans le composant (B), (B1) est présent en une quantité de 75 à 88 % en poids et (B2) est présent en une quantité de 12 à 25% en poids, chaque fois par rapport à (B).

5. Matière à mouler thermoplastique selon l'une quelconque des revendications 1 à 4, caractérisée en ce dans le composant (C), (C1) est présent en une quantité de 60 à 90 % en poids, (C2) est présent en une quantité de 5 à 20% en poids et (C3) est présent en une quantité de 5 à 20 % en poids, chaque fois par rapport à C).

6. Procédé pour la production d'une matière à mouler thermoplastique selon l'une quelconque des revendications 1 à 5, par mélange des composants (A) à (D) et éventuellement (E) dans la masse fondue.

7. Procédé selon la revendication 6, **caractérisé en ce que** le mélange est effectué à une température de 200 à 300°C.

8. Utilisation d'une matière thermoplastique selon l'une quelconque des revendications 1 à 5, pour la production de corps moulés.
